# DEMANDE DE BREVET EUROPEEN

(11) **EP 4 336 604 A1**
(43) Date de publication de la demande: **13.03.2024**
(21) Numéro de dépôt: 22306341.3
(22) Date de dépôt: 12.09.2022
(51) Int. Cl.: H01M 8/04014, H01M 8/04029, H01M 8/04119, H01M 8/249

(54) **MODULE D ALIMENTATION ET DE CONDITIONNEMENT D AIR POUR PILES À COMBUSTIBLES D'UN VÉHICULE**

(71) Demandeur: ALSTOM Holdings, 93400 Saint-Ouen-sur-Seine (FR)
(72) Inventeur: HAMMADI, Yacine, 13510 EGUILLES (FR); TURGIS, Nicolas, 13100 AIX EN PROVENCE (FR); MARTINEZ, Gaël, 13760 PEYROLLES (FR)
(74) Mandataire: Lavoix

(57) **Abrégé**

L'invention concerne un module (40) d'alimentation et de conditionnement d'air pour un système de piles (24) à combustible d'un véhicule, ledit module comprenant :
- une entrée (60) d'air et une sortie (62) d'air, ménagées sur une enveloppe externe ;
- un circuit (46) d'air reçu dans l'enveloppe externe et débouchant sur l'entrée et la sortie ; et
- un échangeur thermique (48), un humidificateur (50) d'air, un espace (52) de distribution et un espace (54) de mélange, disposés sur le circuit d'air ; l'humidificateur étant disposé entre les espaces de distribution et de mélange ; la sortie (62) étant disposée en aval de l'espace de mélange ;
le circuit d'air comprenant une branche (71) de by-pass, reliant les espaces de distribution et de mélange à l'écart de l'humidificateur et comportant une vanne (72) de régulation.

## Description

La présente invention concerne un module d'alimentation et de conditionnement d'air pour un système de piles à combustibles d'un véhicule, notamment ferroviaire.

Dans le cadre de l'alimentation électrique des véhicules ferroviaires, il est connu d'équiper lesdits véhicules de systèmes de type piles à combustible, comme décrit dans le document EP3859848. De manière classique, une pile à combustible génère de l'énergie électrique à partir d'une réaction d'oxydo-réduction entre un flux de dihydrogène et le dioxygène d'un flux d'air.

Il est donc nécessaire de fournir un flux d'air au système de piles à combustibles, au moyen d'un module d'alimentation en air.

Afin d'optimiser l'efficacité et la durée de vie des piles à combustible, il est souhaitable de réguler la température et le taux d'humidité de l'air entrant. Il est donc avantageux d'équiper le module d'alimentation en air des dispositifs appropriés.

Cependant, les systèmes connus impliquent des aménagements encombrants, notamment concernant la tuyauterie de circulation d'air. De plus, les connexions entre les différents dispositifs induisent des pertes de charge et des baisses de pression du flux d'air. Par ailleurs, les équipements des véhicules ferroviaires doivent notamment répondre à des normes anti-feu, qui nécessitent en particulier la minimisation de la masse inflammable desdits équipements.

La présente invention a pour but de proposer un module d'alimentation et de conditionnement d'air de piles à combustibles, adapté à une installation dans un véhicule ferroviaire en remédiant notamment aux inconvénients précités.

A cet effet, l'invention a pour objet un module d'alimentation et de conditionnement du type précité, comprenant : une enveloppe externe, préférentiellement métallique ; une première entrée d'air et au moins une première sortie d'air, ménagées sur ladite enveloppe externe ; un circuit d'air reçu dans l'enveloppe externe et débouchant sur la première entrée et sur l'au moins une première sortie d'air ; et un échangeur thermique, un humidificateur d'air, un espace de distribution et un espace de mélange, disposés sur le circuit d'air et reçus dans l'enveloppe externe ; l'humidificateur d'air comprenant un trajet d'air principal, disposé entre les espaces de distribution et de mélange sur le circuit d'air ; l'au moins une première sortie d'air étant disposée en aval de l'espace de mélange ; le circuit d'air comprenant en outre une branche de by-pass, reliant les espaces de distribution et de mélange à l'écart de l'humidificateur d'air, ladite branche de by-pass comportant une première vanne de régulation de débit.

Suivant d'autres aspects avantageux de l'invention, le module d'alimentation comporte l'une ou plusieurs des caractéristiques suivantes, prises isolément ou suivant toutes les combinaisons techniquement possibles :
- le module d'alimentation comprend en outre une deuxième sortie d'air, ménagée sur l'enveloppe externe ;
- le circuit d'air comprend en outre un bras de décharge, disposé entre l'espace de distribution et la deuxième sortie, ledit bras de décharge comportant une deuxième vanne de régulation de débit ;
- l'échangeur thermique est disposé en amont de l'espace de distribution sur le circuit d'air ;
- le module d'alimentation comprend en outre une deuxième entrée d'air, ménagée sur l'enveloppe externe ; l'humidificateur d'air comprenant un trajet d'air secondaire, distinct du trajet d'air principal et disposé entre la deuxième entrée et la deuxième sortie ;
- le trajet d'air principal et le trajet d'air secondaire de l'humidificateur sont séparés par des membranes étanches à l'air et perméables à l'humidité ;
- le module d'alimentation comprend au moins deux premières sorties d'air, chaque première sortie étant disposée en aval de l'espace de mélange ;
- au moins l'une des premières sorties d'air comporte une troisième vanne de régulation de débit ;
- l'enveloppe externe, l'échangeur thermique et l'humidificateur d'air sont réalisés en métal, de préférence en inox ou en aluminium ;
- l'enveloppe externe est configurée pour être logée dans un coffre de toit d'un véhicule ferroviaire.

L'invention se rapporte en outre à un véhicule, notamment ferroviaire, comprenant : au moins une pile à combustible comprenant une entrée d'air et une sortie d'air ; et un module d'alimentation et de conditionnement d'air tel que décrit ci-dessus, l'au moins une première sortie dudit module d'alimentation étant reliée à l'entrée d'air de l'au moins une pile.

Suivant d'autres aspects avantageux de l'invention, le véhicule comporte l'une ou plusieurs des caractéristiques suivantes, prises isolément ou suivant toutes les combinaisons techniquement possibles :
- la deuxième entrée d'air du module d'alimentation est reliée à la sortie d'air de l'au moins une pile ;
- le véhicule comprend au moins deux piles à combustible, chacune desdites piles comprenant une entrée d'air et une sortie d'air, chaque première sortie d'air du module d'alimentation étant reliée à l'entrée d'air de l'une desdites piles à combustible ;
- le véhicule comprend un coffre de toit, le module d'alimentation étant logé dans ledit coffre de toit.

L'invention sera mieux comprise à la lecture de la description qui va suivre, donnée uniquement à titre d'exemple non limitatif et faite en se référant aux dessins sur lesquels :
- la figure 1 est une représentation schématique partielle, en coupe, d'un véhicule selon un mode de réalisation de l'invention, comprenant un système de piles à combustible et un module d'alimentation et de conditionnement d'air dudit système ; et
- la figure 2 est une représentation schématique du système de piles à combustible et du module d'alimentation et de conditionnement de la figure 1.

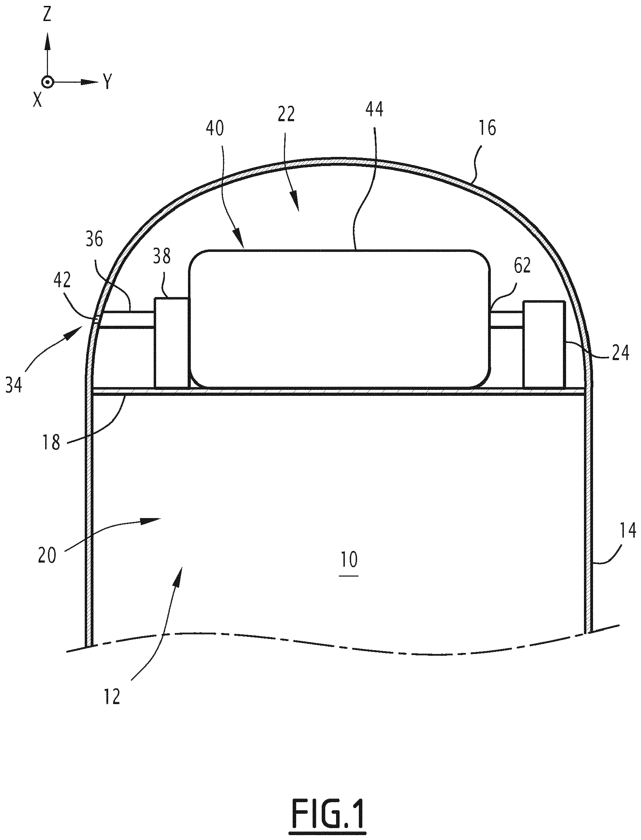

La figure 1 est une représentation schématique partielle, en coupe, d'un véhicule 10 ferroviaire, selon un mode de réalisation de l'invention. On considère une base orthonormée (X, Y, Z) associée au véhicule 10, la direction Z représentant la verticale.

Le véhicule 10 comprend notamment une caisse 12, s'étendant selon une direction principale X horizontale. Ladite caisse comporte notamment deux parois latérales 14 surmontées d'un toit 16.

Les parois latérales 14 s'étendent parallèlement à la direction principale X et sont sensiblement planes et verticales. Les extrémités supérieures des parois latérales 14 sont reliées par un plafond 18 plan. Les parois latérales 14 et le plafond 18 définissent notamment un compartiment 20 dans la caisse 12, ledit compartiment étant apte à recevoir des passagers.

Le toit 16 présente une forme bombée, disposée au-dessus du plafond 18. Ainsi, le toit 16 et le plafond 18 définissent un coffre de toit 22, disposé au-dessus du compartiment 20 dans la caisse 12.

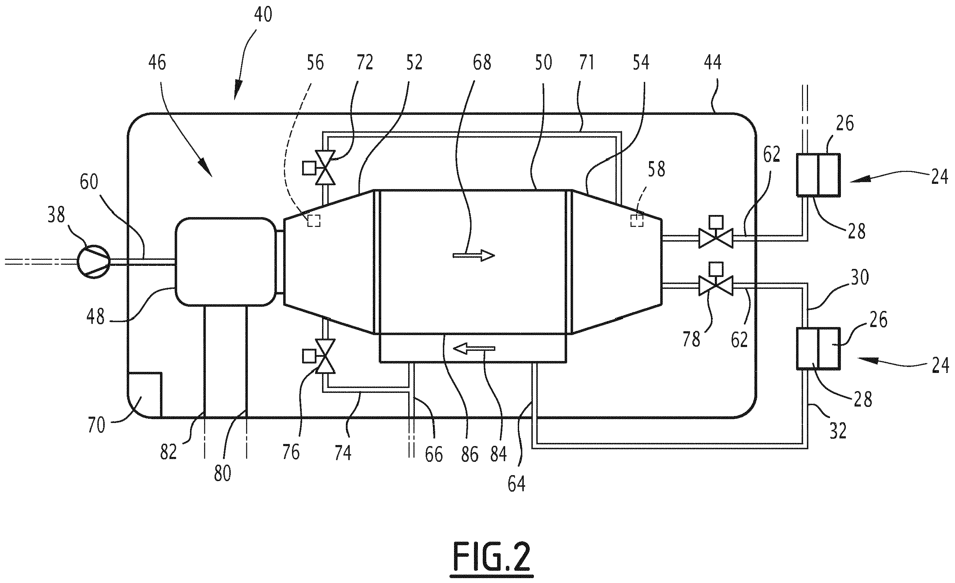

Le véhicule 10 comprend au moins une pile 24 à combustible, reçue dans le coffre de toit 22. De préférence, comme visible sur la figure 2, le véhicule 10 comprend au moins deux piles 24 à combustible et plus préférentiellement une pluralité de piles à combustible.

L'au moins une pile 24 à combustible est configurée pour générer de l'énergie électrique à partir d'une réaction d'oxydo-réduction. En particulier, comme visible sur la figure 2, l'au moins une pile 24 à combustible comporte une anode 26 et une cathode 28. A la cathode 28, du dioxygène subit une réduction électrochimique, fournissant de l'eau. La cathode 28 de la ou de chaque pile 24 à combustible comporte une entrée 30 et une sortie 32 d'air.

Le véhicule 10 comprend en outre un ensemble 34 d'alimentation et de conditionnement d'air, destiné à fournir un flux d'air à l'au moins une pile 24 à combustible. Ce flux d'air apporte le dioxygène nécessaire à la réaction de la cathode 28.

L'ensemble 34 est reçu dans le coffre de toit 22 et comprend : une prise 36 d'air, un compresseur 38 et un module 40 d'alimentation et de conditionnement d'air.

La prise 36 d'air est raccordée à une ouverture 42 ménagée dans le toit 16. Le compresseur 38 est configuré pour envoyer de l'air sous pression dans le module 40 à partir de la prise 36 d'air.

Le module 40 d'alimentation et de conditionnement d'air, représenté de manière plus détaillée sur la figure 2, comporte : une enveloppe externe 44 ; un circuit 46 d'air ; un échangeur thermique 48 ; un humidificateur 50 ; un espace 52 de distribution ; et un espace 54 de mélange.

Le module 40 comprend en outre des capteurs 56, 58 de température, de pression et d'humidité relative. Plus précisément, des premiers capteurs 56 de température, de pression et optionnellement d'humidité relative sont disposés dans l'espace 52 de distribution. Des deuxièmes capteurs 58 de température, de pression et d'humidité relative sont disposés dans l'espace 54 de mélange.

Le module 40 comprend en outre une première entrée 60 et au moins une première sortie 62 d'air. Dans l'exemple représenté, le module 40 comprend en outre une deuxième entrée 64 et une deuxième sortie 66 d'air.

De préférence, le module 40 comprend en outre une interface électronique 70, notamment reliée aux capteurs 56, 58.

Le module 40 est configuré de manière monobloc. Plus précisément, le circuit 46 d'air, l'échangeur thermique 48, l'humidificateur 50, l'espace 52 de distribution, l'espace 54 de mélange et les capteurs 56, 58 sont reçus dans l'enveloppe externe 44. La première entrée 60, l'au moins une première sortie 62, la deuxième entrée 64 et la deuxième sortie 66 sont ménagées sur ladite enveloppe externe 44.

Selon un mode de réalisation, l'interface électronique 70 est également logée dans l'enveloppe externe 44.

De préférence, l'enveloppe externe 44 est configurée pour être logée dans un coffre de toit d'un véhicule ferroviaire, tel que le coffre de toit 22 du véhicule 10. En particulier, l'enveloppe externe présente de préférence une forme allongée pouvant s'étendre selon la direction principale X. De préférence, l'enveloppe externe est configurée pour présenter de faibles dimensions selon la direction Z.

Le circuit 46 d'air s'étend entre la première entrée 60 et l'au moins une première sortie 62. Dans le mode de réalisation représenté, le module 40 comprend deux premières sorties 62 et le circuit 46 débouche sur lesdites premières sorties, en aval de l'espace 54 de mélange. En variante non représentée, le module 40 comprend un nombre de premières sorties supérieur à deux.

L'échangeur thermique 48, l'humidificateur 50, l'espace 52 de distribution et l'espace 54 de mélange sont disposés sur le circuit 46 d'air. L'humidificateur 50 comprend un trajet d'air 68 principal, disposé entre les espaces 52 de distribution et 54 de mélange dans le sens dudit circuit 46.

Le circuit 46 d'air comprend en outre une branche 71 de by-pass, reliant les espaces 52 de distribution et 54 de mélange à l'écart du trajet d'air 68 principal de l'humidificateur 50 d'air. La branche 71 de by-pass comporte une première vanne 72 de régulation de débit.

Le circuit 46 d'air comprend en outre un bras 74 de décharge, disposé entre l'espace 52 de distribution et la deuxième sortie 66. Ledit bras 74 de décharge comporte une deuxième vanne 76 de régulation de débit.

De préférence, dans le cas où le module 40 comprend au moins deux premières sorties 62 d'air, au moins l'une desdites premières sorties 62 comporte une troisième vanne 78 de régulation de débit. Dans le mode de réalisation représenté, chacune des premières sorties 62 comporte une troisième vanne 78.

De préférence, les première 72, deuxième 76 et troisièmes 78 vannes sont des électrovannes ou des vannes à actionneur électrique, reliées à l'interface électronique 70.

Dans le mode de réalisation représenté, l'échangeur thermique 48 est situé en amont de l'espace 52 de distribution, soit entre la première entrée 60 et ledit espace 52.

L'échangeur thermique 48 est de préférence un échangeur air-eau, destiné à refroidir l'air circulant dans le circuit 46. De préférence, le module 40 comprend une entrée 80 et une sortie 82 d'eau, ménagées sur l'enveloppe externe 44 et reliées à l'échangeur thermique 48.

L'humidificateur 50 d'air est de préférence un humidificateur passif, par exemple un humidificateur à membrane ou à fibres. Plus préférentiellement, l'humidificateur 50 d'air comprend un trajet d'air 84 secondaire, distinct du trajet d'air 68 principal. Les trajets d'air principal 68 et secondaire 84 sont séparés l'un de l'autre par des membranes 86, étanches à l'air mais perméables à l'humidité. Le trajet d'air 84 secondaire débouche sur la deuxième entrée 64 et sur la deuxième sortie 66 d'air.

Dans le mode de réalisation représenté, chacune des deux premières sorties 62 est reliée à l'entrée 30 d'air de la cathode 28 d'une pile 24 à combustible. Par ailleurs, la sortie 32 d'air d'au moins une desdites cathodes 28 est reliée à la deuxième entrée 64 d'air. De préférence, la sortie 32 d'air de la cathode 28 de plusieurs piles 24 à combustible est reliée à la deuxième entrée 64.

De préférence, au moins l'enveloppe externe 44, l'échangeur thermique 48 et l'humidificateur 50 du module 40 sont réalisés en métal, plus préférentiellement en inox ou en aluminium.

Un procédé de fonctionnement des piles 24 à combustible et de l'ensemble 34 d'alimentation et de conditionnement d'air va maintenant être décrit.

Un flux d'air, prélevé au niveau de la prise 36 d'air, est envoyé sous pression par le compresseur 38 vers la première entrée 60 du module 40. La pression d'air en aval du compresseur 38 est par exemple de l'ordre de 2 bars. L'air traverse l'échangeur thermique 48 air-eau et est refroidi avant d'arriver dans l'espace 52 de distribution.

Selon un mode de réalisation non représenté, l'échangeur thermique 48 est relié à un réseau d'eau chaude du véhicule 10, de sorte que l'air traversant l'échangeur thermique 48 puisse être réchauffé. Par exemple, l'interface électronique 70 est reliée à une résistance chauffante (non représentée) placée sur un circuit d'eau raccordé à l'entrée 80 et à la sortie 82 d'eau du module 40. Un tel chauffage de l'air est par exemple utile lors du démarrage du dispositif.

Une température est mesurée dans l'espace 52 de distribution par les premiers capteurs 56 et/ou dans l'espace 54 de mélange par les deuxièmes capteurs 58. La mesure de cette température permet éventuellement de réguler le débit d'eau dans l'échangeur thermique 48, pour ajuster ladite température par rapport à une valeur de consigne. La régulation du débit d'eau est commandée par l'interface électronique 70 ou par une unité de commande du véhicule 10, reliée à ladite interface.

Le flux d'air circule ensuite selon le trajet d'air 68 principal de l'humidificateur 50. L'air se charge alors en humidité au niveau des membranes 86, puis atteint l'espace de mélange 54. En fonction d'un taux d'humidité relative mesuré par les deuxièmes capteurs 58, le degré d'ouverture de la première vanne 72 est ajusté par l'interface électronique 70. L'air passant par la branche 71 de by-pass atteint l'espace 54 de mélange depuis l'espace 52 de distribution, sans se charger en humidité, puis se mélange à l'air ayant traversé l'humidificateur 50. Le degré d'humidité de l'air remplissant l'espace 54 de mélange est ainsi régulé par l'interface électronique 70, par rapport à une valeur de consigne.

En outre, une pression est mesurée dans l'espace 52 de distribution par les premiers capteurs 56 et/ou dans l'espace 54 de mélange par les deuxièmes capteurs 58. La mesure de cette pression permet à l'interface électronique 70 d'ajuster le degré d'ouverture de la deuxième vanne 76. En cas de surpression pouvant mettre en danger les piles 24 à combustible, une partie du flux d'air est déchargé hors du circuit 46 par la deuxième sortie 66.

L'air remplissant l'espace 54 de mélange est envoyé vers les premières sorties 62. L'interface électronique 70 ajuste le degré d'ouverture de chaque troisième vanne 78 afin de répartir le flux d'air entre les piles 24 à combustibles reliées au module 40.

Au niveau de chaque cathode 28, une partie du dioxygène du flux d'air subit une réduction électrochimique qui fournit de l'eau. En sortie 32 de la cathode 28, le flux d'air ainsi chargé en humidité est dirigé vers la deuxième entrée 64 et circule selon le trajet d'air 84 secondaire de l'humidificateur 50. L'humidité est alors transférée aux membranes 86, l'air étant ensuite rejeté vers l'extérieur du module 40 au niveau de la deuxième sortie 66. Les membranes 86 sont ainsi rechargées en humidité pour le trajet d'air 68 principal de l'humidificateur 50.

La configuration monobloc du module 40 permet une grande compacité qui facilite son installation dans un coffre de toit 22, tout en permettant un accès aisé des différents éléments pour maintenance. La proximité des différents éléments sur le circuit 46 d'air minimise les pertes de charge le long dudit circuit et optimise l'homogénéité du flux d'air.

La réalisation en métal d'éléments du module 40, tels que l'enveloppe externe, l'échangeur thermique et l'humidificateur, permet en outre d'augmenter la résistance au feu par rapport à des éléments réalisés en plastique. Le module 40 est donc mieux adapté aux normes anti-feu relatives aux véhicules ferroviaires.

## Revendications

1. Module (40) d'alimentation et de conditionnement d'air pour un système de piles (24) à combustible d'un véhicule (10), ledit module comprenant :
- une enveloppe externe (44), préférentiellement métallique ;
- une première entrée (60) d'air et au moins une première sortie (62) d'air, ménagées sur ladite enveloppe externe ;
- un circuit (46) d'air reçu dans l'enveloppe externe et débouchant sur la première entrée et sur l'au moins une première sortie d'air ; et
- un échangeur thermique (48), un humidificateur (50) d'air, un espace (52) de distribution et un espace (54) de mélange, disposés sur le circuit d'air et reçus dans l'enveloppe externe ; l'humidificateur d'air comprenant un trajet d'air (68) principal, disposé entre les espaces de distribution et de mélange sur le circuit d'air ; l'au moins une première sortie (62) d'air étant disposée en aval de l'espace de mélange ;
le circuit d'air comprenant en outre une branche (71) de by-pass, reliant les espaces de distribution et de mélange à l'écart de l'humidificateur d'air, ladite branche de by-pass comportant une première vanne (72) de régulation de débit.

2. Module d'alimentation et de conditionnement selon la revendication 1, comprenant en outre une deuxième sortie (66) d'air, ménagée sur l'enveloppe externe.

3. Module d'alimentation et de conditionnement selon la revendication 2, dans lequel le circuit d'air comprend en outre un bras (74) de décharge, disposé entre l'espace (52) de distribution et la deuxième sortie (66), ledit bras de décharge comportant une deuxième vanne (76) de régulation de débit.

4. Module d'alimentation et de conditionnement selon l'une des revendications précédentes, dans lequel l'échangeur thermique (48) est disposé en amont de l'espace (52) de distribution sur le circuit d'air.

5. Module d'alimentation et de conditionnement selon l'une des revendications 2 à 4, comprenant en outre une deuxième entrée (64) d'air, ménagée sur l'enveloppe externe ; l'humidificateur (50) d'air comprenant un trajet d'air (84) secondaire, distinct du trajet d'air principal et disposé entre la deuxième entrée et la deuxième sortie.

6. Module d'alimentation et de conditionnement selon la revendication 5, dans lequel le trajet d'air (68) principal et le trajet d'air (84) secondaire de l'humidificateur (50) sont séparés par des membranes (86) étanches à l'air et perméables à l'humidité.

7. Module d'alimentation et de conditionnement selon l'une des revendications précédentes, comprenant au moins deux premières sorties (62) d'air, chaque première sortie étant disposée en aval de l'espace (54) de mélange.

8. Module d'alimentation et de conditionnement selon la revendication 7, dans lequel au moins l'une des premières sorties d'air comporte une troisième vanne (78) de régulation de débit.

9. Module d'alimentation et de conditionnement selon l'une des revendications précédentes, dans lequel l'enveloppe externe (44), l'échangeur thermique (48) et l'humidificateur (50) d'air sont réalisés en métal, de préférence en inox ou en aluminium.

10. Module d'alimentation et de conditionnement selon l'une des revendications précédentes, dans lequel l'enveloppe externe (44) est configurée pour être logée dans un coffre de toit (22) d'un véhicule (10) ferroviaire.

11. Véhicule (10), notamment ferroviaire, comprenant : au moins une pile (24) à combustible comprenant une entrée (30) d'air et une sortie (32) d'air ; et un module (40) d'alimentation et de conditionnement d'air selon l'une des revendications précédentes, l'au moins une première sortie (62) dudit module d'alimentation étant reliée à l'entrée (30) d'air de l'au moins une pile.

12. Véhicule selon la revendication 11, prise en combinaison avec la revendication 5, dans lequel la deuxième entrée (64) d'air du module d'alimentation et de conditionnement est reliée à la sortie (32) d'air de l'au moins une pile.

13. Véhicule selon la revendication 11 ou 12, prise en combinaison avec la revendication 7, ledit véhicule comprenant au moins deux piles (24) à combustible, chacune desdites piles comprenant une entrée (30) d'air et une sortie d'air, chaque première sortie (62) d'air du module d'alimentation et de conditionnement étant reliée à l'entrée d'air de l'une desdites piles à combustible.

14. Véhicule selon l'une des revendications 11 à 13, comprenant un coffre de toit (22), le module (40) d'alimentation et de conditionnement étant logé dans ledit coffre de toit.

## Revendications modifiées

### Revendications modifiées conformément à la règle 137(2) CBE.

1. Module (40) d'alimentation et de conditionnement d'air pour un système de piles (24) à combustible d'un véhicule (10), ledit module comprenant :
- une enveloppe externe (44), préférentiellement métallique ;
- une première entrée (60) d'air et au moins une première sortie (62) d'air, ménagées sur ladite enveloppe externe ;
- un circuit (46) d'air reçu dans l'enveloppe externe et débouchant sur la première entrée et sur l'au moins une première sortie d'air ; et
- un échangeur thermique (48), un humidificateur (50) d'air, un espace (52) de distribution et un espace (54) de mélange, disposés sur le circuit d'air et reçus dans l'enveloppe externe ; l'humidificateur d'air comprenant un trajet d'air (68) principal, disposé entre les espaces de distribution et de mélange sur le circuit d'air ; l'au moins une première sortie (62) d'air étant disposée en aval de l'espace de mélange ;
l'échangeur thermique (48) étant disposé en amont de l'espace (52) de distribution sur le circuit d'air ;
le circuit d'air comprenant en outre une branche (71) de by-pass, reliant les espaces de distribution et de mélange à l'écart de l'humidificateur d'air, ladite branche de by-pass comportant une première vanne (72) de régulation de débit ;
le module comprenant en outre une deuxième sortie (66) d'air, ménagée sur l'enveloppe externe ;
le module étant **caractérisé en ce que** le circuit d'air comprend en outre un bras (74) de décharge, disposé entre l'espace (52) de distribution et la deuxième sortie (66), ledit bras de décharge comportant une deuxième vanne (76) de régulation de débit.

2. Module d'alimentation et de conditionnement selon la revendication 1, comprenant en outre une deuxième entrée (64) d'air, ménagée sur l'enveloppe externe ; l'humidificateur (50) d'air comprenant un trajet d'air (84) secondaire, distinct du trajet d'air principal et disposé entre la deuxième entrée et la deuxième sortie.

3. Module d'alimentation et de conditionnement selon la revendication 2, dans lequel le trajet d'air (68) principal et le trajet d'air (84) secondaire de l'humidificateur (50) sont séparés par des membranes (86) étanches à l'air et perméables à l'humidité.

4. Module d'alimentation et de conditionnement selon l'une des revendications précédentes, comprenant au moins deux premières sorties (62) d'air, chaque première sortie étant disposée en aval de l'espace (54) de mélange.

5. Module d'alimentation et de conditionnement selon la revendication 4, dans lequel au moins l'une des premières sorties d'air comporte une troisième vanne (78) de régulation de débit.

6. Module d'alimentation et de conditionnement selon l'une des revendications précédentes, dans lequel l'enveloppe externe (44), l'échangeur thermique (48) et l'humidificateur (50) d'air sont réalisés en métal, de préférence en inox ou en aluminium.

7. Module d'alimentation et de conditionnement selon l'une des revendications précédentes, dans lequel l'enveloppe externe (44) est configurée pour être logée dans un coffre de toit (22) d'un véhicule (10) ferroviaire.

8. Véhicule (10), notamment ferroviaire, comprenant : au moins une pile (24) à combustible comprenant une entrée (30) d'air et une sortie (32) d'air ; et un module (40) d'alimentation et de conditionnement d'air selon l'une des revendications précédentes, l'au moins une première sortie (62) dudit module d'alimentation étant reliée à l'entrée (30) d'air de l'au moins une pile.

9. Véhicule selon la revendication 8, prise en combinaison avec la revendication 2, dans lequel la deuxième entrée (64) d'air du module d'alimentation et de conditionnement est reliée à la sortie (32) d'air de l'au moins une pile.

10. Véhicule selon la revendication 8 ou 9, prise en combinaison avec la revendication 4, ledit véhicule comprenant au moins deux piles (24) à combustible, chacune desdites piles comprenant une entrée (30) d'air et une sortie d'air, chaque première sortie (62) d'air du module d'alimentation et de conditionnement étant reliée à l'entrée d'air de l'une desdites piles à combustible.

11. Véhicule selon l'une des revendications 8 à 10, comprenant un coffre de toit (22), le module (40) d'alimentation et de conditionnement étant logé dans ledit coffre de toit.
